# EUROPEAN PATENT APPLICATION

(11) **EP 4 625 559 A1**
(43) Date of publication of application: **01.10.2025**
(21) Application number: 23892780.0
(22) Date of filing: 07.09.2023
(51) Int. Cl.: H01M 8/04313, H01M 8/04537, H01M 8/04664, H01M 8/04694, H01M 8/04746, H01M 8/04858, H01M 8/04955

(54) **METHOD FOR CONTROLLING FUEL CELL DEVICE, CONTROL DEVICE, AND FUEL CELL SYSTEM**

(30) Priority: 21.11.2022 JP 2022185870
(71) Applicant: Panasonic Intellectual Property Management Co., Ltd., Kadoma-shi, Osaka 571-0057 (JP)
(72) Inventor: KANEKO, Yasushi, Kadoma-shi, Osaka 571-0057 (JP); TANAKA, Yoshikazu, Kadoma-shi, Osaka 571-0057 (JP); ISE, Takehiko, Kadoma-shi, Osaka 571-0057 (JP); TAGUCHI, Yoshifumi, Kadoma-shi, Osaka 571-0057 (JP); YOSHIHARA, Yasumichi, Kadoma-shi, Osaka 571-0057 (JP)
(74) Representative: Grünecker Patent- und Rechtsanwälte PartG mbB
(86) International application number: PCT/JP2023/032598
(87) International publication number: WO 2024/111218

(57) **Abstract**

According to the present disclosure, a method for controlling a fuel cell device includes receiving a voltage measured at the time of power generation of the fuel cell device and determining whether the degradation level of the fuel cell device is normal based on a comparison of the voltage and a first threshold value that decreases with increasing operational amount of the fuel cell device and that corresponds to the operational amount of the fuel cell device at the measurement time of the voltage.

## Description

### Technical Field

The present disclosure relates to a method for controlling a fuel cell device, a control device, and a fuel cell system.

### Background Art

A variety of proposals have been made in the past to determine the degradation of fuel cell devices. For example, PTL 1 describes a solid electrolyte fuel battery including a fuel cell module including a plurality of solid electrolyte fuel cells and a reformer, fuel supply means for supplying fuel to the reformer, oxidant gas supply means for supplying oxidant gas to the plurality of solid electrolyte fuel cells, water supply means for supplying water to the reformer, and control means for changing the amount of the fuel supplied from the fuel supply means in accordance with a required power generation amount. The control means includes degradation determination means for determining the deterioration of the fuel cell module. The degradation determination means is characterized in that it continues the operation to supply pre-calculated certain supplied amounts of fuel, oxidant gas, and water from the fuel supply means, oxidant gas supply means, and water supply means, respectively, based on fixed values until the fuel cell module enters a stable operating state and, thereafter, makes the degradation determination.

### Citation List

### Patent Literature

PTL 1: Japanese Unexamined Patent Application Publication No. 2010-238617

### Summary of Invention

### Technical Problem

The present disclosure provides, as an example, a method for controlling a fuel cell device, a control device, and a fuel cell system capable of monitoring the degradation level of a fuel cell device more appropriately than before.

### Solution to Problem

To solve the above problem, according to an aspect of the present disclosure, a method for controlling a fuel cell device includes receiving a voltage measured at the time of power generation of the fuel cell device and determining whether the degradation level of the fuel cell device is normal based on a comparison of the voltage and a first threshold value that decreases with increasing operational amount of the fuel cell device and that corresponds to the operational amount of the fuel cell device at the measurement time of the voltage.

According to another aspect of the present disclosure, a control device includes a receiver that receives a voltage measured at the time of power generation of a fuel cell device and a controller that determines whether a degradation level of the fuel cell device is normal based on a comparison of the voltage and a first threshold value that decreases with increasing operational amount of the fuel cell device and that corresponds to the operational amount of the fuel cell device at the measurement time of the voltage.

According to still another aspect of the present disclosure, a fuel cell system includes a fuel cell device and the above-described control device.

### Advantageous Effects of Invention

According to an aspect of the present disclosure, the method for controlling a fuel cell device, the control device, and the fuel cell system can monitor the degradation level of the fuel cell device more appropriately than before.

### Brief Description of Drawings

[Fig. 1] Fig. 1 illustrates an example of a fuel cell system according to an embodiment.
[Fig. 2] Fig. 2 illustrates an example of a control device illustrated in Fig. 1.
[Fig. 3] Fig. 3 illustrates an example of a voltage stabilization timing when the voltage stabilizes after a predetermined length of time has elapsed since the fuel cell device started generating power.
[Fig. 4] Fig. 4 is a flowchart illustrating an example of the operation performed by the control device in the fuel cell system according to an embodiment (a method for controlling the fuel cell device).
[Fig. 5] Fig. 5 is a flowchart of an example of a method for generating a first threshold value for determining whether the degradation level of the fuel cell device is normal and a second threshold value for determining whether to continue power generation of the fuel cell device in a voltage range lower than the estimated level of the voltage dropped due to the degradation of the fuel cell device.
[Fig. 6] Fig. 6 illustrates an example of the first threshold value for determining whether the degradation level of the fuel cell device is normal and the second threshold value for determining whether the fuel cell device continues to generate power in a voltage range lower than the estimated level of the voltage dropped due to the degradation of the fuel cell device.
[Fig. 7] Fig. 7 is a flowchart illustrating an example of the operations performed by a fuel cell device in a fuel cell system (a method for controlling a fuel cell device) according to a first example of the embodiment.

### Description of Embodiments

Although PTL 1 describes degradation determination of a fuel cell module, it only determines whether the fuel cell module is degraded or not and does not determine whether the degradation level is normal when the fuel cell module is degraded.

Therefore, according to a first aspect of the present disclosure, a method for controlling a fuel cell device includes receiving a voltage measured at the time of power generation of the fuel cell device and determining whether the degradation level of the fuel cell device is normal based on a comparison of the voltage and a first threshold value that decreases with increasing operational amount of the fuel cell device and that corresponds to the operational amount of the fuel cell device at the measurement time of the voltage.

According to the method for controlling a fuel cell device of the present aspect, the degradation level of a fuel cell device can be monitored more appropriately than before.

More specifically, according to the method for controlling a fuel cell device of the present aspect, it can be appropriately monitored whether the degradation level of the fuel cell device is normal in a voltage range lower than the estimated level of the voltage dropped due to the degradation of the fuel cell device, as compared with the case where the above-described first threshold value used to determine whether the degradation level of the fuel cell device is normal is not taken into account.

According to a method for controlling a fuel cell device of a second aspect of the present disclosure, in the method for controlling a fuel cell device of the first aspect, if the above-described voltage is greater than or equal to the first threshold value, it may be determined that the degradation level of the fuel cell device is normal. If the voltage is less than the first threshold value and greater than or equal to a second threshold value that is less than the first threshold value, it may be determined that the degradation level of the fuel cell device is abnormal, and the fuel cell device may be made to continue power generation. If the voltage is less than the second threshold value, the fuel cell device may be made to stop power generation.

According to the method for controlling a fuel cell device of the present aspect described above, if the voltage measured at the time of power generation of the fuel cell device is less than the first threshold value and greater than or equal to the second threshold value in a voltage range lower than the estimated level of the voltage dropped due to the degradation of the fuel cell device, it can be known that the degradation level of the fuel cell device is abnormal while allowing the fuel cell device to continue power generation.

In addition, according to the method for controlling a fuel cell device of the present aspect, if the voltage measured at the time of power generation of the fuel cell device is less than the second threshold value, the power generation of the fuel cell device is stopped and, thus, the fuel cell device can be repaired or replaced in a timely manner.

According to a method for controlling a fuel cell device of a third aspect of the present disclosure, in the method for controlling a fuel cell device of the second aspect, the first threshold value corresponding to the operational amount of the fuel cell device that is determined to be the lifetime of the fuel cell device may be equal to the second threshold value or may be greater than the second threshold value.

As described above, the first threshold value decreases with increasing operational amount of the fuel cell device. Therefore, according to the method for controlling a fuel cell device of the present aspect, since the magnitude relationship between the first threshold value and the second threshold value is the same as the above-described relationship, the first threshold value and the second threshold value can be appropriately set so that the first threshold value is not less than the second threshold value throughout the time period until the operational amount of the fuel cell device is determined to be the lifetime of the fuel cell device.

According to a method for controlling a fuel cell device of a fourth aspect of the present disclosure, in the method for controlling a fuel cell device of the second or third aspect, the second threshold value may be constant regardless of the operational amount of the fuel cell device.

According to a method for controlling a fuel cell device of a fifth aspect of the present disclosure, in the method for controlling a fuel cell device of any one of the second to fourth aspects, if the voltage measured at the time of power generation of the fuel cell device is less than the first threshold value and greater than or equal to the second threshold value, the fuel cell device may be made to generate power under the same operating conditions as when the voltage is greater than or equal to the first threshold value.

According to the method for controlling a fuel cell device of the present aspect described above, even if the voltage measured at the time of power generation of the fuel cell device is less than the first threshold value and greater than or equal to the second threshold value, power generation of the fuel cell device is performed while the operating conditions used when the voltage is greater than or equal to the first threshold value are maintained. Therefore, the power output fluctuation of the fuel cell device is reduced as compared with the case where the fuel cell device generates power under the operating conditions different from those used when the voltage is greater than or equal to the first threshold value.

According to a method for controlling a fuel cell device of a sixth aspect of the present disclosure, in the method for controlling a fuel cell device of any one of the second to fourth aspects, if the voltage measured at the time of the power generation of the fuel cell device is less than the first threshold value and greater than or equal to the second threshold value, at least one of a fuel gas utilization rate and an oxidant gas utilization rate may be set to be the same as or higher than the utilization rate when the voltage is greater than or equal to the first threshold value, and the fuel cell device may be made to generate power.

According to the method for controlling a fuel cell device of the present aspect described above, even if the voltage measured at the time of power generation of the fuel cell device is less than the first threshold value and greater than or equal to the second threshold value, at least one of the above-described gas utilization rates is set to be the same as or higher than the utilization rate when the voltage is greater than or equal to the first threshold value, and the fuel cell device is made to generate power. Thus, the power generation efficiency of the fuel cell device is appropriately maintained or improved as compared with the case where the fuel cell device generates power by decreasing the gas utilization rate from the gas utilization rate when the voltage is greater than or equal to the first threshold value.

According to a method for controlling a fuel cell device of a seventh aspect of the present disclosure, in the method for controlling a fuel cell device of the first aspect, if the voltage measured at the time of power generation of the fuel cell device is greater than or equal to the first threshold value, it may be determined that the degradation level of the fuel cell device is normal. If the voltage is less than the first threshold value, it may be determined that the degradation level of the fuel cell device is abnormal, and the fuel cell device may be made to continue power generation under the same operating conditions as when the voltage is greater than or equal to the first threshold value.

According to the method for controlling a fuel cell device of the present aspect described above, even if the voltage measured at the time of power generation of the fuel cell device is less than the first threshold value, power generation of the fuel cell device is performed under the same operating conditions as when the voltage is greater than or equal to the first threshold value. Therefore, the power output fluctuation of the fuel cell device can be reduced as compared with the case where the fuel cell device generates power under the operating conditions different from those used when the voltage is greater than or equal to the first threshold value.

According to a method for controlling a fuel cell device of an eighth aspect of the present disclosure, in the method for controlling a fuel cell device of the first aspect, if the voltage measured at the time of power generation of the fuel cell device is greater than or equal to the first threshold value, it may be determined that the degradation level of the fuel cell device is normal. If the voltage is less than the first threshold value, it may be determined that the degradation level of the fuel cell device is abnormal, at least one of a fuel gas utilization rate and an oxidant gas utilization rate may be set to be the same as or higher than the utilization rate when the voltage is greater than or equal to the first threshold value, and the fuel cell device may be made to continue power generation.

According to the method for controlling a fuel cell device of the present aspect described above, even if the voltage measured at the time of power generation of the fuel cell device is less than the first threshold value, at least one of the above-described gas utilization rates is set to be the same as or higher than the utilization rate when the voltage is greater than or equal to the first threshold value, and the fuel cell device is made to continue power generation. Therefore, the power generation efficiency of the fuel cell device can be appropriately maintained or improved as compared with the case where the fuel cell device generates power by decreasing the gas utilization rate from the gas utilization rate when the voltage is greater than or equal to the first threshold value.

According to a method for controlling a fuel cell device of a ninth aspect of the present disclosure, in the method for controlling a fuel cell device of any one of the first to fourth aspects, a determination result as to whether the degradation level of the fuel cell device is normal may be notified to an external device.

According to a method for controlling a fuel cell device of a tenth aspect of the present disclosure, in the method for controlling a fuel cell device of any one of the first to fourth aspects, if it is determined that the degradation level of the fuel cell device is abnormal, estimation of a replacement time for the fuel cell device may be revised, and the revised replacement time for the fuel cell device may be notified to an external device.

Normally, the estimation value of the replacement time for a fuel cell is set to a value corresponding to the normal degradation of the fuel cell device. However, when the voltage measured at the time of power generation is less than the first threshold value and, thus, the degradation level of the fuel cell device is determined to be abnormal, the voltage drop is often a predictive sign of an earlier replacement time for the fuel cell device.

Therefore, according to the method for controlling a fuel cell device of the present aspect, if it is determined that the degradation level of the fuel cell device is abnormal, the estimation of the replacement time for the fuel cell device is revised based on the measured voltage less than the first threshold value and is notified to an external device. This provides more appropriate information regarding the replacement time for the fuel cell device than in the case where the estimation of the replacement time is not revised.

According to a method for controlling a fuel cell device of an eleventh aspect of the present disclosure, in the method for controlling a fuel cell device of any one of the first to fourth aspects, if it is determined that the degradation level of the fuel cell device is abnormal, estimation of a maintenance time for the fuel cell device may be revised, and the revised maintenance time for the fuel cell device may be notified to an external device.

Normally, the estimation value of the maintenance time for the fuel cell is set to a value corresponding to the normal degradation of the fuel cell device. However, if the voltage measured at the time of power generation of the fuel cell device is less than the first threshold value and, thus, it is determined that the degradation level of the fuel cell device is abnormal, the voltage drop is often a predictive sign of an earlier maintenance time for the fuel cell device.

Therefore, according to the method for controlling a fuel cell device of the present aspect, if it is determined that the degradation level of the fuel cell device is abnormal, the estimation of the maintenance time of the fuel cell device is revised based on a measured voltage less than the first threshold value and is notified to an external device. This provides more appropriate information regarding the maintenance time of the fuel cell device than in the case where the estimation of the maintenance time is not revised.

According to a twelfth aspect of the present disclosure, a control device includes a receiver that receives a voltage measured at the time of power generation of a fuel cell device and a controller that determines whether the degradation level of the fuel cell device is normal based on a comparison of the voltage and a first threshold value that decreases with increasing operational amount of the fuel cell device and that corresponds to the operational amount of the fuel cell device at the measurement time of the voltage.

According to such a configuration, the control device of the present aspect can monitor the degradation level of the fuel cell device more appropriately than before. The details of the operations and effects of the control device according to the present aspect are the same as those of the method for controlling a fuel cell device according to the first aspect, and therefore, the description of the operations and effects is not repeated.

According to a thirteenth aspect of the present disclosure, a fuel cell system includes a fuel cell device and the control device according to the twelfth aspect.

According to such a configuration, the fuel cell system of the present aspect can monitor the degradation level of the fuel cell device more appropriately than before. The details of the operations and effects of the fuel cell system according to the present aspect are the same as those of the method for controlling a fuel cell device according to the first aspect, and therefore, the description of the operations and effects is not repeated.

Particular examples according to the above-described aspects of the present disclosure are described below with reference to the accompanying drawings. The particular examples described below are all examples according to the above-described aspects of the present disclosure. Therefore, a shape, a value, a constituent element, the positions and the connection form of the constituent elements, and the like described below shall not be construed as limiting the scope of the claims, unless otherwise stated in the claims.

In addition, among the constituent elements described below, the constituent element that does not appear in an independent claim, which has the broadest scope of the present disclosure, is described as an optional constituent element. In addition, in the drawings, those identified by the same reference numeral may be omitted from the description. For ease of understanding of the drawings, the constituent elements are schematically illustrated and may not be exact representations in terms of shape and dimensional ratio.

Furthermore, in the operation performed by the device, the order of the processes may be rearranged as necessary, or a well known process may be added.

### (Embodiment)

### [Device Configuration]

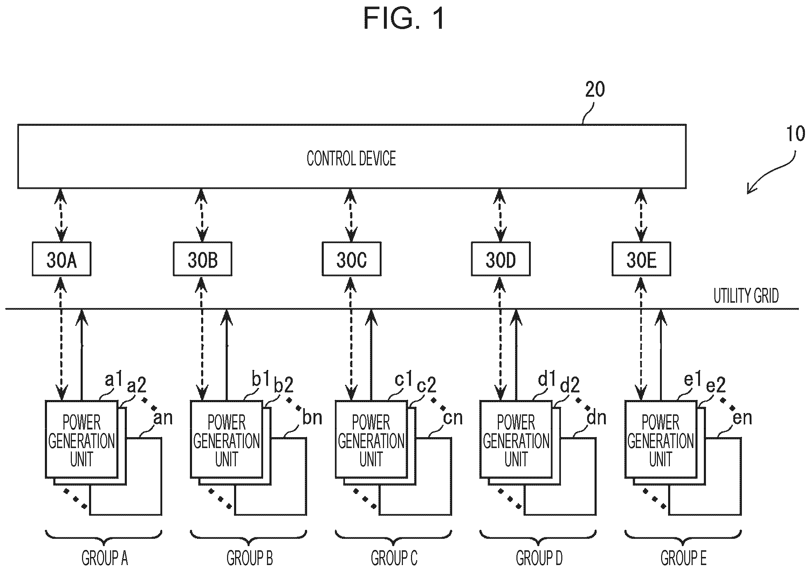

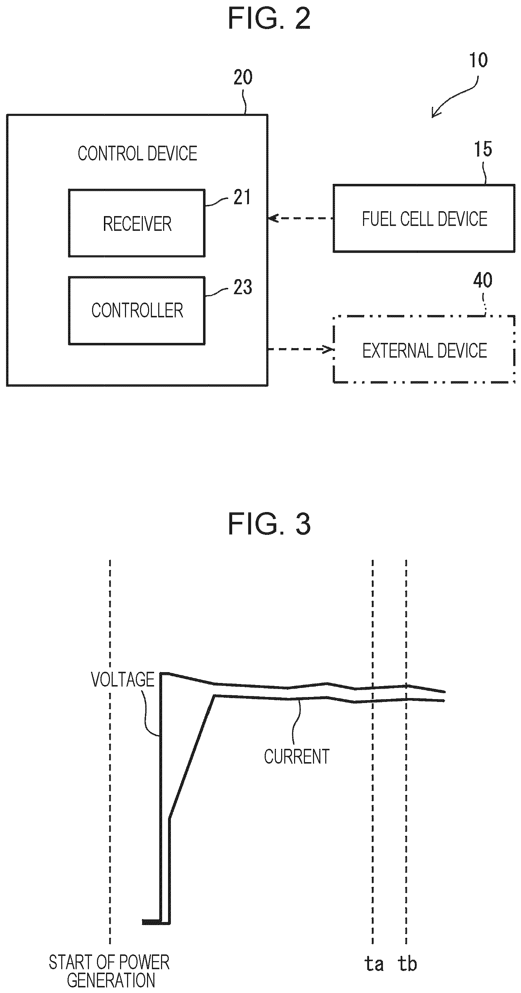

Fig. 1 illustrates an example of a fuel cell system according to the embodiment. Fig. 2 illustrates an example of a control device illustrated in Fig. 1.

A fuel cell system 10 according to the present embodiment includes a fuel cell device 15 and a control device 20. The fuel cell system 10 may include only one power generation unit including a fuel cell. However, the fuel cell system 10 may include a plurality of power generation units each including a fuel cell, as illustrated in Fig. 1. In this example, the fuel cell system 10 includes power generation unit groups including power generation units a1 to an, b1 to bn, c1 to cn, d1 to dn, and e1 to en. In this case, the fuel cell system 10 may be, for example, a system that supplies a large amount of power to a utility grid. The configuration of the power generation unit groups in Fig. 1 is described in more detail below.

The power generation unit groups consist of a plurality of power generation units a1 to an, b1 to bn, c1 to cn, d1 to dn, and e1 to en. Although not illustrated, each of the power generation units a1 to an, b1 to bn, c1 to cn, d1 to dn, and e1 to en includes a fuel cell stack, a power conditioner for converting DC power generated by the fuel cell stack into AC power and outputting the AC power to the utility grid, and a control device for controlling the operation performed by the equipment.

In this example, the power generation unit groups include the power generation units a1 to an belonging to a group A, the power generation units b1 to bn belonging to a group B, the power generation units c1 to cn belonging to a group C, the power generation units d1 to dn belonging to a group D, and the power generation units e1 to en belonging to a group E. All the power generation units belonging to one group are also referred to simply as "power generation units in a group". Hereinafter, for convenience of description, the power generation units a1 to an, b1 to bn, c1 to cn, d1 to dn, and e1 to en may be referred to as simply "power generation units 15ij (i = a to e, j = 1 to n)". In this example, each of the power generation units corresponds to a fuel cell power generation device according to the present disclosure. However, each of the groups may correspond to the fuel cell power generation device according to the present disclosure.

The configuration of the power generation unit groups described above is only an example and is not limited thereto. For example, the power generation unit groups may consist of the power generation units in a single group.

Control devices 30A to 30E are provided for the power generation units a1 to an in the group A, the power generation units b1 to bn in the group B, the power generation units c1 to cn in the group C, the power generation units d1 to dn in the group D, and the power generation units e1 to en in the group E, respectively, and control the operations performed by the power generation units in the groups.

For example, the control device 30A controls the power outputs of the power generation units a1 to an in the group A via a communication network so as to enable the efficient operations (for example, lifetime optimization) of the power generation units a1 to an in the group A.

Any control device having a control function can be used as each of the control devices 30A to 30E. Each of the control devices 30A to 30E includes an arithmetic processing unit (not illustrated), a storage unit (not illustrated) that stores a control program, and a communicator (not illustrated). The arithmetic processing unit reads and executes the control program stored in the storage unit and, thus, performs predetermined control in each of the control devices 30A to 30E. For example, a microprocessor is used as the arithmetic processing unit. For example, a memory is used as the storage unit.

As illustrated in Fig. 2, the control device 20 includes a receiver 21 and a controller 23. The receiver 21 is a device that receives the voltage measured at the time of power generation of a fuel cell device 15. For example, the receiver 21 may receive the above-described voltage transmitted from the fuel cell device 15 via the communication network at the voltage stabilization timing when the fuel cell device 15 is generating power at its rated power output. For example, as illustrated in Fig. 3, the "voltage stabilization timing" may be an appropriate timing within the time period (between the time ta and time tb) in which the voltage is stable after a certain time length has elapsed after the fuel cell device 15 starts generating power. Therefore, the voltage measured at the time of power generation of the fuel cell device 15 may be the average value of the voltage over the time period (between the time ta and time tb).

The controller 23 determines whether the degradation level of the fuel cell device 15 is normal based on a comparison of the voltage measured at the time of power generation of the fuel cell device 15 and a first threshold value that decreases with increasing operational amount of the fuel cell device 15 and that corresponds to the operational amount of the fuel cell device 15 at the measurement time of the voltage. An example of the "operational amount of the fuel cell device 15" is the accumulated power generation time or accumulated number of times of power generation, but is not limited thereto. The first threshold value is a reference voltage used to determine whether the degradation level of the fuel cell device 15 is normal in a voltage range lower than the estimated level of the voltage dropped due to the degradation of the fuel cell device 15. The details of the first threshold value are described in a first example.

In this example, the above-described determination is made by the controller 23 for each of all the power generation units 15ij (i = a to e, j = 1 to n) of the fuel cell system 10, but is not limited thereto.

For example, although not illustrated, if the fuel cell system 10 includes a single power generation unit, the above-described determination is made for the single power generation unit by the controller 23.

Alternatively, the above-described determination may be made for each of the power generation units 15ij (i = a to e, j = 1 to n) by a control device other than the controller 23 (for example, one of the control devices 30A to 30E).

Still alternatively, the above-described determination may be made for each of the power generation units 15ij (i = a to e, j = 1 to n) by a control device other than the controller 23 and the control devices 30A to 30E (for example, a control device (not illustrated) in the power generation unit).

Any controller having a control function can be used as the controller 23. The controller 23 includes an arithmetic processing unit (not illustrated) and a storage unit (not illustrated) that stores a control program. The arithmetic processing unit reads and executes the control program stored in the storage unit and, thus, performs predetermined control in the controller 23. For example, a microprocessor is used as the arithmetic processing unit. For example, a memory is used as the storage unit.

### [Operation]

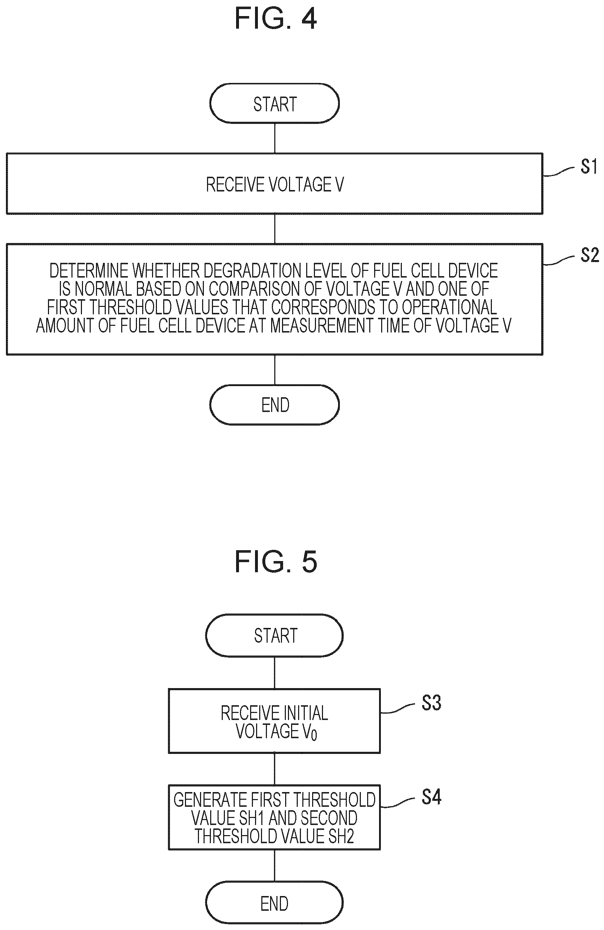

Fig. 4 is a flowchart of an example of the operation performed by the control device in the fuel cell system (a method for controlling a fuel cell device) according to the embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the example described below, control of the operations is performed by the controller 23.

When the operation performed by the control device 20 starts, a voltage V measured at the time of power generation of the fuel cell device 15 is first received in step S1. More specifically, the voltage V measured in each of the power generation units 15ij (i = a to e, j = 1 to n) is received by the receiver 21 via the communication network.

The timing when the voltage V is measured in each of the power generation units 15ij (i = a to e, j = 1 to n) may be, for example, a voltage stabilization timing when the power generation unit 15ij (i = a to e, j = 1 to n) generates power at its rated power output.

Subsequently, in step S2, it is determined whether the degradation level of the fuel cell device 15 is normal based on a comparison of the voltage V in step S1 and the first threshold value that decreases with increasing operational amount of the fuel cell device 15 and that corresponds to the operational amount of the fuel cell device 15 at the measurement time of the voltage V. More specifically, for each of the power generation units 15ij (i = a to e, j = 1 to n), the voltage V in step S1 and the first threshold value are identified, and it is determined whether the degradation level of each of the power generation units 15ij (i = a to e, j = 1 to n) is normal based on the comparison of the two. When each of the groups A to E corresponds to a fuel cell power generation device of the present disclosure, the representative value of the operational amount and the representative value of the voltage V of each of the groups A to E are used to determine whether the degradation level is normal. For example, the average or median value of the operational amounts of the power generation units belonging to each of the groups A to E is used as the representative value of the operational amount of the group. In addition, for example, the average or median value of the voltages of the power generation units belonging to each of the groups A to E is used as the representative value of the voltage V of the group.

For each of the power generation units 15ij (i = a to e, j = 1 to n), the operations in steps S1 and S2 may be repeated each time the accumulated power generation time, which is an example of the operational amount of the fuel cell device 15, increases by a certain amount of time, or each time the accumulated number of times of power generation, which is an example of the operational amount of the fuel cell device 15, increases by a certain number.

The result of the determination as to whether the degradation level of the fuel cell device 15 is normal may be notified to an external device 40 (refer to Fig. 2). An example of the "external device 40" may be an information terminal or a display device. The information terminal may be, but is not limited to, an information terminal of a consumer receiving the service of supplying power generated by the fuel cell system 10, and the display device may be, but is not limited to, a display device in a maintenance company. This enables a consumer or the like who receives a service of supplying power generated by the fuel cell system 10 to easily see the degradation level of the fuel cell device 15.

According to the present embodiment described above, the degradation level of the fuel cell device 15 can be monitored more appropriately than before.

More specifically, according to the present embodiment, it can be appropriately monitored whether the degradation level of the fuel cell device 15 is normal in a voltage range lower than the estimated level of the voltage V dropped due to the degradation of the fuel cell device 15, as compared with the case where the above-described first threshold value used to determine whether the degradation level of the fuel cell device 15 is normal is not taken into account.

### (First Example)

A method for controlling the fuel cell device 15 according to the first example of the embodiment is similar to the method for controlling the fuel cell device 15 according to the embodiment, except for the details described below.

According to the method for controlling the fuel cell device 15 of the present example, if the voltage V measured at the time of power generation of the fuel cell device 15 is greater than or equal to a first threshold value SH1, it is determined that the degradation level of the fuel cell device 15 is normal. If the voltage V is less than the first threshold value SH1 and is greater than or equal to a second threshold value SH2 that is less than the first threshold value SH1, it is determined that the degradation level of the fuel cell device 15 is abnormal, and the fuel cell device 15 is made to continuously generate power. However, if the voltage V is less than the second threshold value SH2, the fuel cell device 15 stops generating power. That is, even if the abnormal degradation level of the fuel cell device 15 continues, the fuel cell power generation continues as long as the voltage V is greater than or equal to the second threshold value SH2.

### [First Threshold Value SH1 and Second Threshold Value SH2]

Fig. 5 is a flowchart of an example of a method for generating the first threshold value used to determine whether the degradation level of the fuel cell device is normal and the second threshold value used to determine whether to continue power generation of the fuel cell device in a voltage range lower than the estimated level of the voltage dropped due to the degradation of the fuel cell device.

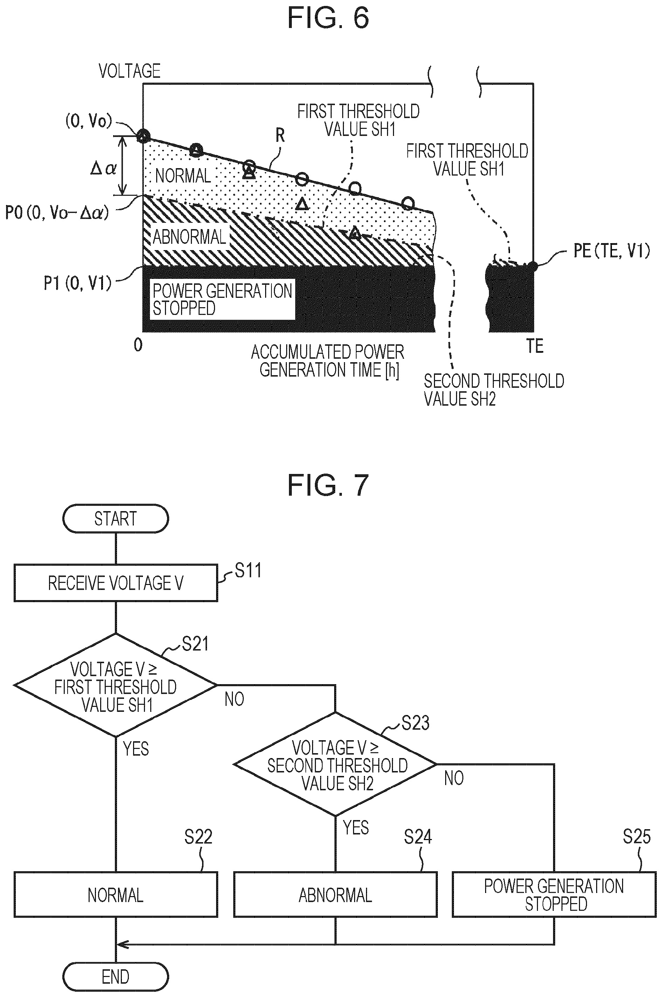

Fig. 6 illustrates an example of the first threshold value used to determine whether the degradation level of the fuel cell device is normal and the second threshold value used to determine whether the fuel cell device continues to generate power in a voltage range lower than the estimated level of the voltage dropped due to the degradation of the fuel cell device.

The abscissa of Fig. 6 represents the time period from "zero" of the power generation time of the fuel cell device 15 to the time when the power generation time reaches the accumulated power generation time that is determined to be the lifetime of the fuel cell device 15 (hereinafter referred to as an "end-of-life determination time TE").

The ordinate of Fig. 6 represents the voltage V of the fuel cell device 15 corresponding to the accumulated power generation time of the fuel cell device 15. The voltage V is measured in a timely manner as the accumulated power generation time of the fuel cell device 15 increases. For example, the voltage V may be measured at the time of power generation of the fuel cell device 15 each time the accumulated power generation time of the fuel cell device 15 increases by a predetermined length of power generation time. The "time of power generation of the fuel cell device 15" may be, for example, a voltage stabilization timing when the fuel cell device 15 is generating power at its rated power output.

As illustrated in Fig. 5, in step S3, an initial voltage V₀ is measured at the time of power generation of the fuel cell device 15. For example, the initial voltage V₀ may be measured at the voltage stabilization timing when the fuel cell device 15 generates power at its rated power output for the first time after the fuel cell device 15 is manufactured.

It is generally known that the voltage V of the fuel cell device 15 gradually decreases with increasing accumulated power generation time of the fuel cell device 15, as indicated by the circles in Fig. 6. That is, the reference line R in Fig. 6 corresponds to the line drawn by linearly approximating the estimated levels of the voltage dropped due to degradation of the fuel cell device 15. The voltage V1 (the voltage marked with a black circle in Fig. 6) when the accumulated power generation time of the fuel cell device 15 reaches the end-of-life determination time TE has a known predetermined value.

Subsequently, as illustrated in Fig. 5, in step S4, the first threshold value SH1 is generated using the initial voltage V₀ in step S3. The second threshold value SH2 is also generated using the voltage V1.

As illustrated in Fig. 6, the first threshold value SH1 is identified by a straight line drawn so that the voltage V decreases with increasing accumulated power generation time of the fuel cell device 15 in a voltage range lower than the estimated level of the voltage dropped due to the degradation of the fuel cell device 15 (refer to the reference line R in Fig. 6).

In this example, the first threshold value SH1 is identified by a straight line that passes through a point P0(0, V₀ - Δα) where the voltage when the power generation time of the fuel cell device 15 is "zero" is lower than the initial voltage V₀ by a predetermined value Δα and a point PE(TE, V1) where the voltage when the accumulated power generation time of the fuel cell device 15 is the end-of-life determination time TE is V1. The predetermined value Δα can be set to an appropriate voltage between the initial voltage V₀ and the voltage V1. For example, the predetermined value Δα may be about (V₀ - V1)/2.

As illustrated in Fig. 6, the second threshold value SH2 is less than the first threshold value SH1 and is constant regardless of the operational amount of the fuel cell device 15 (in this case, the accumulated power generation time).

In this example, the second threshold value SH2 is identified by a straight line that passes through a point P1(0, V1) where the voltage is V1 when the power generation time of the fuel cell device 15 is "zero" and a point PE(TE, V1) where the voltage when the accumulated power generation time of the fuel cell device 15 is the end-of-life determination time TE is the voltage V1. In this case, the second threshold value SH2 is the "voltage V1".

Furthermore, the first threshold value SH1 corresponding to the operational amount of the fuel cell device 15 when the operational amount of the fuel cell device 15 has the value determined to be the lifetime of the fuel cell device 15 (in this case, the end-of-life determination time TE) may be equal to the second threshold value SH2 or may be greater than the second threshold value SH2. Thus, the first threshold value SH1 decreases linearly with increasing operational amount of the fuel cell device 15. Therefore, since the magnitude relationship between the first threshold value SH1 and the second threshold value SH2 is the same as the above-described relationship, the first threshold value SH1 and the second threshold value SH2 can be appropriately set so that the first threshold value SH1 is not less than the second threshold value SH2 throughout the time period until the operational amount is determined to be the lifetime of the fuel cell device 15.

### [Operation]

Fig. 7 is a flowchart illustrating an example of the operations performed by the fuel cell device in the fuel cell system (a method for controlling the fuel cell device) according to the first example of the embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the example described below, control of the operations is performed by the controller 23.

When the operation of the control device 20 starts, the voltage V measured at the time of power generation of the fuel cell device 15 is first received in step S11. More specifically, the voltage V measured in each of the power generation units 15ij (i = a to e, j = 1 to n) is received by the receiver 21 via the communication network.

The timing when the voltage V is measured in each of the power generation units 15ij (i = a to e, j = 1 to n) may be, for example, the voltage stabilization timing when the power generation unit 15ij (i = a to e, j = 1 to n) generates power at its rated power output.

In some of the power generation units 15ij (i = a to e, j = 1 to n), for example, as indicated by triangles in Fig. 6, as the accumulated power generation time of the power generation unit increases, the voltage V of the power generation unit may decrease so as to deviate from the estimated level of the voltage dropped due to the degradation of the power generation unit (refer to the reference line R in Fig. 6). As a result, the voltage V in step S11 may decrease from the voltage indicated by the circle in Fig. 6.

Subsequently, in step S21, it is determined whether the voltage V in step S11 is greater than or equal to, among the first threshold values SH1, the one that corresponds to the accumulated power generation time of the fuel cell device 15 at the measurement time of the voltage V.

If the voltage V in step S11 is greater than or equal to the first threshold value SH1 ("Yes" in step S21), it is determined in step S22 that the degradation level of the fuel cell device 15 is normal. For example, as illustrated in Fig. 6, when the voltage V in step S11 is a voltage corresponding to the dot area, it is determined that the degradation level of the fuel cell device 15 is normal.

However, if the voltage V in step S11 is less than the first threshold value SH1 ("No" in step S21), the processing proceeds to the next determination step (step S23) where it is determined whether the voltage V in step S11 is greater than or equal to the second threshold value SH2.

If the voltage V in step S11 is greater than or equal to the second threshold value SH2 ("Yes" in step S23), it is determined in step S24 that the degradation level of the fuel cell device 15 is abnormal, and the fuel cell device 15 is made to continue power generation. For example, as illustrated in Fig. 6, if the voltage V in step S11 is a voltage corresponding to the hatched area between the first threshold value SH1 and the second threshold value SH2, it is determine that the degradation level of the fuel cell device 15 is abnormal.

However, if the voltage V in step S11 is less than the second threshold value SH2 ("No" in step S23), the power generation of the fuel cell device 15 is stopped in step S25. For example, as illustrated in Fig. 6, if the voltage V in step S11 is a voltage corresponding to the blackened area less than the second threshold value SH2, the power generation of the fuel cell device 15 is stopped. When each of the groups A to E corresponds to a fuel cell power generation device, power generation of all the power generation units is stopped that belong to a group for which the voltage V is less than the second threshold value SH2.

As described above, according to the present example, when the voltage V measured at the time of power generation of the fuel cell device 15 is less than the first threshold value SH1 and is greater than or equal to the second threshold value SH2 in a voltage range lower than the estimated level of the voltage dropped due to the degradation of the fuel cell device 15 (refer to the reference line R in Fig. 6), it can be known that the degradation level of the fuel cell device 15 is abnormal while the fuel cell device 15 is continuously generating power.

According to the present example, if the voltage V measured at the time of power generation of the fuel cell device 15 is less than the second threshold value SH2, the power generation of fuel cell device 15 can be stopped, and the fuel cell device 15 can be repaired or replaced in a timely manner.

According to the present example, the method for controlling the fuel cell device 15, the control device 20, and the fuel cell system 10 may be similar to those according to the embodiment, except for the features described above.

### (Second Example)

The method for controlling the fuel cell device 15 according to the second example of the embodiment is similar to the method for controlling the fuel cell device 15 according to the embodiment, except for the details described below.

According to the method for controlling the fuel cell device 15 of the present example, if the voltage V measured at the time of power generation of the fuel cell device 15 is less than the first threshold value SH1 and greater than or equal to the second threshold value SH2, the fuel cell device 15 is made to generate power under the same operating conditions as when the voltage V is greater than or equal to the first threshold value SH1.

As described above, according to the method for controlling the fuel cell device 15 of the present example, even if the voltage V measured at the time of power generation of the fuel cell device 15 is less than the first threshold value SH1 and greater than or equal to the second threshold value SH2, power generation of the fuel cell device 15 is continuously performed under the operating conditions when the voltage V is greater than or equal to the first threshold value SH1. Therefore, the power output fluctuation of the fuel cell device 15 is reduced as compared with the case where the fuel cell device 15 generates power under the operating conditions different from the operating conditions used when the voltage is greater than or equal to the first threshold value.

According to the present example, the method for controlling the fuel cell device 15, the control device 20, and the fuel cell system 10 may be similar to those according to the embodiment or the first example of the embodiment, except for the features described above.

### (Third Example)

The method for controlling the fuel cell device 15 according to the third example of the embodiment is similar to the method for controlling the fuel cell device 15 according to the embodiment, except for the details described below.

According to the method for controlling the fuel cell device 15 of the present example, if the voltage V measured at the time of power generation of the fuel cell device 15 is less than the first threshold value SH1 and greater than or equal to the second threshold value SH2, at least one of the fuel gas utilization rate and the oxidant gas utilization rate is set to be the same as or higher than that when the voltage V is greater than or equal to the first threshold value SH1 and, then, the fuel cell device 15 generates power.

According to the method for controlling the fuel cell device 15 of the present example described above, even if the voltage V measured at the time of power generation of the fuel cell device 15 is less than the first threshold value SH1 and greater than or equal to the second threshold value SH2, at least one of the above-described gas utilization rates is set to be the same as or higher than that when the voltage is greater than or equal to the first threshold value SH1 and, then, the power generation of the fuel cell device 15 is performed. Therefore, the power generation efficiency of the fuel cell device 15 is appropriately maintained or improved as compared with the case where the fuel cell device 15 generates power by decreasing the gas utilization rate from the gas utilization rate when the voltage V is greater than or equal to the first threshold value SH1.

The method for controlling the fuel cell device 15, the control device 20, and the fuel cell system 10 according to the present example may be similar to those according to the embodiment or the first example of the embodiment, except for the features described above.

### (Fourth Example)

The method for controlling the fuel cell device 15 according to the fourth example of the embodiment is similar to the method for controlling the fuel cell device 15 according to the embodiment, except for the details described below.

According to the method for controlling the fuel cell device 15 of the present example, if the voltage measured at the time of power generation of the fuel cell device 15 is greater than or equal to the first threshold value SH1, it is determined that the degradation level of the fuel cell device 15 is normal. If the voltage V is less than the first threshold value SH1, it is determined that the degradation level of the fuel cell device 15 is abnormal, and the fuel cell device 15 is made to continuously generate power under the same operating conditions as when the voltage V is greater than or equal to the first threshold value.

According to the method for controlling the fuel cell device 15 according to the present example described above, even if the voltage V measured at the time of power generation of the fuel cell device 15 is less than the first threshold value SH1, power generation of the fuel cell device 15 is continuously performed under the same operating conditions as when the voltage V is greater than or equal to the first threshold value SH1. Therefore, it can be known that the power output fluctuation of the fuel cell device 15 is reduced as compared with the case where the fuel cell device 15 generates power under the operating conditions different from the operating conditions used when the threshold value is greater than or equal to the first threshold value.

The method for controlling the fuel cell device 15, the control device 20, and the fuel cell system 10 according to the present example may be similar to those according to the embodiment or the first example of the embodiment, except for the features described above.

### (Fifth Example)

A method for controlling the fuel cell device 15 according to the fifth example of the embodiment is similar to the method for controlling the fuel cell device 15 according to the embodiment, except for the details described below.

According to the method for controlling the fuel cell device 15 of the present example, if the voltage V measured at the time of power generation of the fuel cell device 15 is greater than or equal to the first threshold value SH1, it is determined that the degradation level of the fuel cell device 15 is normal. If the voltage V is less than the first threshold value SH1, it is determined that the degradation level of the fuel cell device 15 is abnormal, and at least one of the fuel gas utilization rate and the oxidant gas utilization rate is set to be the same as or higher than that when the voltage V is greater than or equal to the first threshold value SH1 and, then, the fuel cell device 15 is made to continuously generate power.

According to the method for controlling the fuel cell device 15 according to the present example described above, even if the voltage V measured at the time of power generation of the fuel cell device 15 is less than the first threshold value SH1, at least one of the above-described gas utilization rates is set to be the same as or higher than that used when the voltage V is greater than or equal to the first threshold value SH1, and the fuel cell device 15 generates power. Therefore, the power generation efficiency of the fuel cell device 15 can be appropriately maintained or improved as compared with the case where the fuel cell device 15 generates power by decreasing the gas utilization rate from that when the voltage is greater than or equal to the first threshold value SH1.

The method for controlling the fuel cell device 15, the control device 20, and the fuel cell system 10 according to the present example may be similar to those according to the embodiment or the first example of the embodiment, except for the features described above.

### (First Modification)

The method for controlling the fuel cell device 15 according to the first modification of the embodiment is similar to the method for controlling the fuel cell device 15 according to the embodiment, except that if it is determined that the degradation level of the fuel cell device 15 is abnormal, the estimation of the replacement time for the fuel cell device 15 is revised, and the revised replacement time for the fuel cell device 15 is notified to the external device 40.

Normally, the estimation value of the replacement time for a fuel cell is set to a value based on the assumption of the normal degradation of the fuel cell device 15. However, if the voltage V measured at the time of power generation of the fuel cell device 15 is less than the first threshold value SH1 and, thus, it is determined that the degradation level of the fuel cell device 15 is abnormal, the voltage drop is often a predictive sign of an earlier replacement time for the fuel cell device 15.

Therefore, according to the method for controlling the fuel cell device 15 of the present modification, if it is determined that the degradation level of the fuel cell device 15 is abnormal, the estimation of the replacement time for the fuel cell device 15 is revised based on the measured voltage less than the first threshold value SH1, and the revised estimation is notified to the external device 40. This provides more appropriate information regarding the replacement time for the fuel cell device 15 than in the case where the estimation of the replacement time is not revised.

The method for controlling the fuel cell device 15, the control device 20, and the fuel cell system 10 according to the present modification may be similar to those according to any one of the embodiment and the first to fifth examples of the embodiment, except for the features described above.

### (Second Modification)

The method for controlling the fuel cell device 15 according to the second modification of the embodiment is similar to the method for controlling the fuel cell device 15 according to the embodiment, except that if it is determined that the degradation level of the fuel cell device 15 is abnormal, the estimated maintenance time for the fuel cell device 15 is revised, and the revised maintenance time for the fuel cell device 15 is notified to the external device 40.

Normally, the estimation value of the maintenance time for a fuel cell is set to a value based on the assumption of the normal degradation of the fuel cell device 15. However, if the voltage V measured at the time of power generation of the fuel cell device 15 is less than the first threshold value SH1 and, thus, it is determined that the degradation level of the fuel cell device 15 is abnormal, the voltage drop is often a predictive sign of an earlier maintenance time for the fuel cell device 15.

Therefore, according to the method for controlling the fuel cell device 15 of the present modification, if it is determined that the degradation level of the fuel cell device 15 is abnormal, the estimation of the maintenance time of the fuel cell device 15 is revised based on a measured voltage less than the first threshold value SH1, and the revised maintenance time is notified to the external device 40. This provides more appropriate information regarding the maintenance time for the fuel cell device 15 than in the case where the estimation of the maintenance time is not revised.

The method for controlling the fuel cell device 15, the control device 20, and the fuel cell system 10 according to the present modification may be similar to any one of the present embodiment and the first to fifth examples of the embodiment, except for the features described above.

The embodiment, the first to fifth examples of the embodiment, and the first and second modifications of the embodiment may be combined with one another as long as they do not exclude each other. From the above description, it will be appreciated by those skilled in the art that many improvements and other embodiments of the present disclosure could be made. Accordingly, the above description should be construed as an example only and is for the purpose of teaching those skilled in the art how best to practice the present disclosure. The details of the configuration and/or function can be substantially changed without departing from the spirit of the present disclosure.

### Industrial Applicability

One aspect of the present disclosure can be used for a method for controlling a fuel cell device, a control device, and a fuel cell system that can monitor the degradation level of a fuel cell device more appropriately than before. Reference Signs List

10 fuel cell system
15 fuel cell device
15ij power generation unit
20 control device
21 receiver
23 controller
30A control device
30B control device
30C control device
30D control device
30E control device
40 external device
SH1 first threshold value
SH2 second threshold value
a1 to an power generation unit
b1 to bn power generation unit
c1 to cn power generation unit
d1 to dn power generation unit
e1 to en power generation unit

## Claims

1. A method for controlling a fuel cell device comprising:
receiving a voltage measured at the time of power generation of the fuel cell device; and
determining whether the degradation level of the fuel cell device is normal based on a comparison of the voltage and a first threshold value that decreases with increasing operational amount of the fuel cell device and that corresponds to the operational amount of the fuel cell device at the measurement time of the voltage.

2. The method for controlling a fuel cell device, wherein if the voltage is greater than or equal to the first threshold value, it is determined that the degradation level of the fuel cell device is normal,
wherein if the voltage is less than the first threshold value and greater than or equal to a second threshold value that is less than the first threshold value, it is determined that the degradation level of the fuel cell device is abnormal, and the fuel cell device is made to continue power generation, and
wherein if the voltage is less than the second threshold value, the fuel cell device is made to stop power generation.

3. The method for controlling a fuel cell device according to claim 2, wherein the first threshold value corresponding to the operational amount of the fuel cell device that is determined to be the lifetime of the fuel cell device is equal to the second threshold value or greater than the second threshold value.

4. The method for controlling a fuel cell device according to claim 2 or 3, wherein the second threshold value is constant regardless of the operational amount of the fuel cell device.

5. The method for controlling a fuel cell power generation device according to any one of claims 2 to 4, wherein if the voltage is less than the first threshold value and greater than or equal to the second threshold value, the fuel cell device is made to generate power under the same operating conditions as when the voltage is greater than or equal to the first threshold value.

6. The method for controlling a fuel cell power generation device according to any one of claims 2 to 4, wherein if the voltage is less than the first threshold value and greater than or equal to the second threshold value, at least one of a fuel gas utilization rate and an oxidant gas utilization rate is set to be the same as or higher than the utilization rate when the voltage is greater than or equal to the first threshold value, and the fuel cell device is made to generate power.

7. The method for controlling a fuel cell device according to claim 1, wherein if the voltage is greater than or equal to the first threshold value, it is determined that the degradation level of the fuel cell device is normal, and
wherein if the voltage is less than the first threshold value, it is determined that the degradation level of the fuel cell device is abnormal, and the fuel cell device is made to continue power generation under the same operating conditions as when the voltage is greater than or equal to the first threshold value.

8. The method for controlling a fuel cell device according to claim 1, wherein if the voltage is greater than or equal to the first threshold value, it is determined that the degradation level of the fuel cell device is normal, and
wherein if the voltage is less than the first threshold value, it is determined that the degradation level of the fuel cell device is abnormal, at least one of a fuel gas utilization rate and an oxidant gas utilization rate is set to be the same as or higher than the utilization rate when the voltage is greater than or equal to the first threshold value, and the fuel cell device is made to continue power generation.

9. The method for controlling a fuel cell device according to any one of claims 1 to 4, wherein a determination result as to whether the degradation level of the fuel cell device is normal is notified to an external device.

10. The method for controlling a fuel cell device according to any one of claims 1 to 4, wherein if it is determined that the degradation level of the fuel cell device is abnormal, estimation of a replacement time for the fuel cell device is revised, and the revised replacement time for the fuel cell device is notified to an external device.

11. The method for controlling a fuel cell device according to any one of claims 1 to 4, wherein if it is determined that the degradation level of the fuel cell device is abnormal, estimation of a maintenance time for the fuel cell device is revised, and the revised maintenance time for the fuel cell device is notified to an external device.

12. A control device comprising:
a receiver that receives a voltage measured at the time of power generation of a fuel cell device; and
a controller that determines whether a degradation level of the fuel cell device is normal based on a comparison of the voltage and a first threshold value that decreases with increasing operational amount of the fuel cell device and that corresponds to the operational amount of the fuel cell device at the measurement time of the voltage.

13. A fuel cell system comprising:
a fuel cell device; and
the control device according to claim 12.
